# EUROPÄISCHE PATENTSCHRIFT

(11) **EP 0 953 101 B1**
(45) Veröffentlichungstag und Bekanntmachung des Hinweises auf die Patenterteilung: **07.08.2002**
(21) Anmeldenummer: 98905283.2
(22) Anmeldetag: 12.01.1998
(51) Int. Cl.: F02B 27/02, F02M 35/10

(54) **ANSAUGEINRICHTUNG AUS THERMOPLASTISCHEM KUNSTSTOFF**
INTAKE SYSTEM OF THERMOPLASTIC PLASTICS
SYSTEME D'ADMISSION EN MATIERE THERMOPLASTIQUE

(30) Priorität: 15.01.1997 DE 19701118
(43) Veröffentlichungstag der Anmeldung: 03.11.1999
(73) Patentinhaber: FILTERWERK MANN & HUMMEL GmbH, 71631 Ludwigsburg (DE)
(72) Erfinder: KOPEC, Edvard, D-71638 Ludwigsburg (DE); WACHSMANN, Klaus, D-74391 Erligheim (DE); ERNST, Volker, D-74343 Sachsenheim (DE); LEIPELT, Rudolf, D-71672 Marbach (DE)
(74) Vertreter: Voth, Gerhard, Dipl.-Ing.
(86) Internationale Anmeldenummer: EP9800121
(87) Internationale Veröffentlichungsnummer: WO9831925

(56) Entgegenhaltungen:
- EP-A- 0 201 180
- EP-A- 0 664 390
- DE-A- 4 102 453
- DE-A- 4 403 219
- PONTICEL: "vibration-welded intake manifolds " MANUFACTURING SOLUTIONS, April 1997, Seite 29 XP000689527

## Beschreibung

Die Erfindung betrifft eine Ansaugeinrichtung aus thermoplastischem Kunststoff insbesondere für die Ansaugluft einer Brennkraftmaschine nach dem Oberbegriff des Hauptanspruchs.

Aus der Presseinformation der Bayer AG vom 03.11.1993 läßt sich entnehmen, daß ein einfaches Verfahren für die Herstellung von Ansaugstutzen für PKW darin besteht, Halbschalen im Spritzgießverfahren herzustellen. Jeweils zwei dieser Formteile werden in einem zweiten Spritzgießvorgang an den Berührungslinien mit Kunststoff so umspritzt, daß eine formschlüssige und dichte Verbindung entsteht. Diese Methode soll den Vorteil haben, daß Teile mit glatten Oberflächen entstehen. Das Verfahren wurde zwischenzeitlich weiterentwickelt und läßt sich mittlerweile bei einer Vielzahl von Ansaugrohren bzw. Ansaugeinrichtungen anwenden. Als Verbindungstechnik zwischen den beiden Halbschalen hat sich neben dem Umspritzen auch das Reibschweißverfahren bewährt.

Aus der EP 5933 B1 ist ein Saugrohr bekannt, welches ebenfalls aus zwei Halbschalen besteht. Diese werden miteinander verschweißt bzw. verklebt. Ein Nachteil dieser Halbschalentechnik ist darin zu sehen, daß sehr komplexe Rohrgeometrien das Verbinden der Halbschalen erheblich erschweren. Vor allem dort, wo sich Rohre überkreuzen bzw. ineinander verschlungen sind, ist eine Verbindung mittels Umspritzen oder Reibschweißen nicht mehr möglich. In diesen Fällen wurde die Technik des Kernausschmelzverfahren angewendet, die allerdings einen höheren Aufwand erfordert.

Der Erfindung liegt daher die Aufgabe zugrunde, einer Ansaugvorrichtung aus thermoplastischem Kunststoff zu schaffen, bei der trotz komplizierter Formen die Herstellung in Halbschalentechnik möglich ist. Diese Aufgabe wird durch die Merkmale von Anspruch 1 gelöst.

Der wesentliche Vorteil der Erfindung liegt darin, daß zunächst ein erstes Element hergestellt wird, welches eine im wesentlichen geschlossene Form aufweist, wobei der Hohlraum durch die Verwendung von Kernziehteilen gebildet wird. Gleichzeitig ist das erste Element die untere Halbschale der Ansaugrohre, so daß ein zweites Element, welches ebenfalls in Spritzgießtechnik aus thermoplastischem Kunststoff hergestellt wird, lediglich die Abdeckung und die obere Halbschale der Ansaugrohre bildet. Die Verbindung der beiden Elemente erfolgt in einer vorteilhaften Ausgestaltung der Erfindung durch Reibschweißen . Der in dem ersten Element angeordnete Hohlraum kann als Luftsammler bzw. Luftsammelraum genutzt werden. Er kann aber auch gemäß einer weiteren Ausgestaltung der Erfindung derart gestaltet sein, daß ein weiteres, insbesondere einschiebbares Element eingefügt werden kann, welches zur Variation der Saugrohrlänge bzw. der Saugrohröffnungen in den Luftsammelraum dient.

Eine vorteilhafte Weiterbildung der Erfindung sieht vor, weitere Elemente schaltbar anzuordnen, d. h. durch eine Schwenk-oder Drehbewegung an die Ansaugrohre zu koppeln bzw. abzukoppeln. Damit besteht die Möglichkeit, je nach Motordrehzahl und Lastzustand die optimale Ansauglänge einzustellen.

In einer weiteren Ausgestaltung der Erfindung ist in dem Luftsammelraum ein Luftfilter oder weitere Luftleiteinrichtungen vorgesehen.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert.
Figur 1, zeigt einen Querschnitt durch ein Saugrohr,
Figur 2, ein Saugrohr mit veränderter Saugrohrlänge,
Figur 3, ein Ansaugrohr mit variabler Saugrohrlänge.

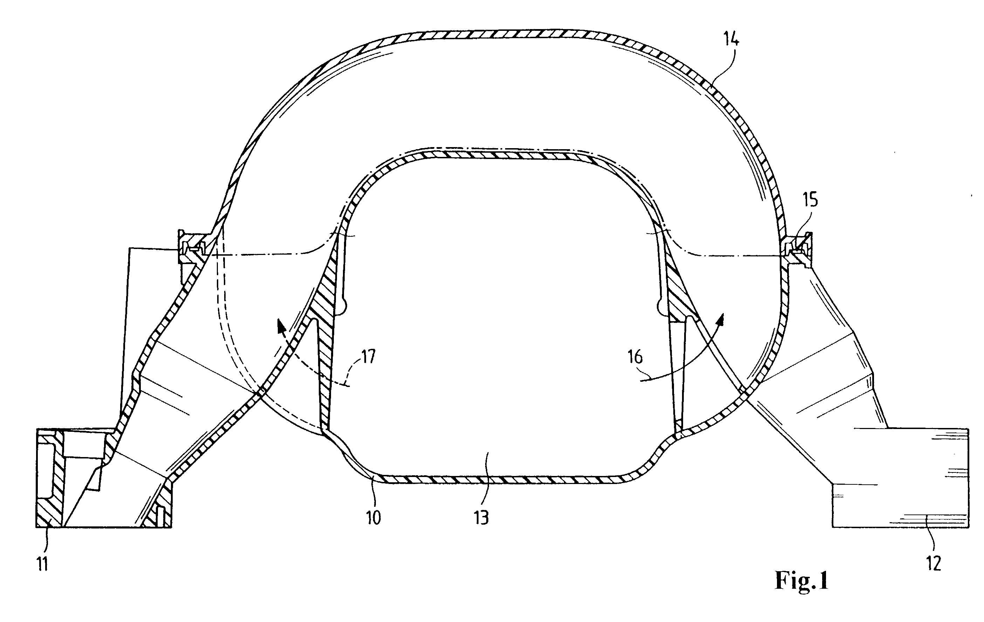

Das Ansaugrohr gemäß Figur 1 ist ein kompletter Ansaugverteiler bzw. eine Ansaugeinrichtung für eine Brennkraftmaschine mit V-förmiger Anordnung der Zylinderreihen. Die Ansaugeinrichtung befindet sich in üblicher Weise zwischen den beiden Zylinderreihen und besteht aus einem ersten Element 10, welches einen linksseitigen Anschlußflansch 11 und einen rechtsseitigen Anschußflansch 12 aufweist.
Über die beiden Flanschteile wird die Ansaugeinrichtung an den Zylinderköpfen der Brennkraftmaschine befestigt. Das Element 10 weist im wesentlichen eine geschlossene Form auf, der Hohlraum 13 dient als Luftsammelraum, dem die Verbrennungsluft über ein vorgeschaltetes und hier nicht dargestelltes Filter gereinigt zugeführt wird. Eine Abdeckung 14 ist über eine umlaufende Kunststoffschweißverbindungsfläche 15 mit dem Element 10 verbunden. Die Trennlinie zwischen dem Element 10 und der Abdeckung 14 ist in der Figur 1 strichpunktiert eingezeichnet. Durch das Zusammenwirken der beiden Elemente, entstehen Ansaugrohre die ausgehend von dem Hohlraum 13 die Ansaugluft gemäß den Pfeilen 16 und 17 zu den jeweiligen Ansaugflanschen 11 und 12 führen.

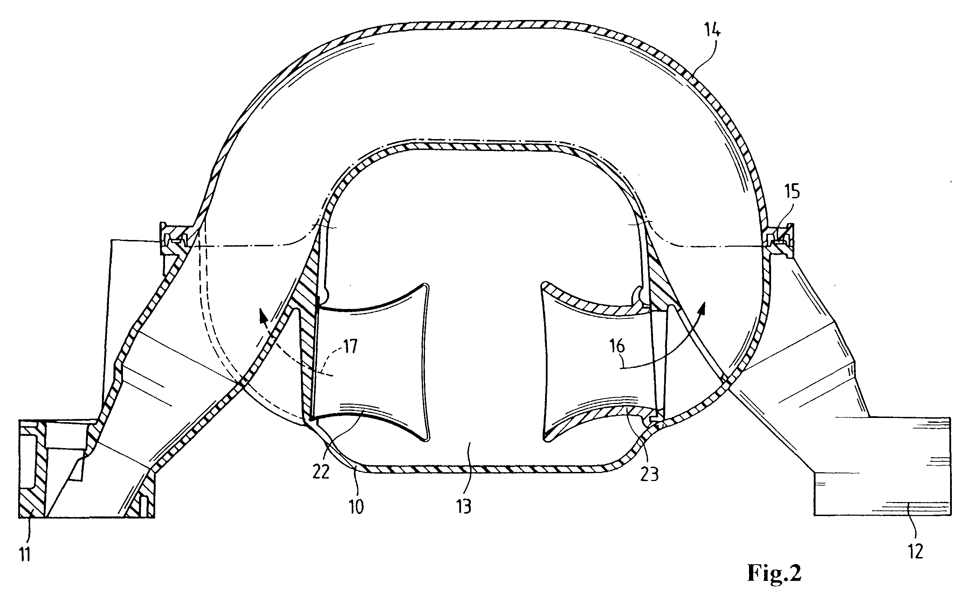

Figur 2 zeigt ein Ansaugrohr, das ähnlich dem in Figur 1 gezeigte aufgebaut ist. Zur Verlängerung der wirksamen Saugrohrlänge befinden sich in dem Hohlraum 13 zwei Zusatzteile, 22, 23, dieses sind jeweils in den Hohlraum eingeschoben und bestehen ebenfalls aus thermoplastischem Kunststoff. Die Verbindung zu dem Element 10 erfolgt mittels Ultraschallschweißen oder durch einfache Rast-oder Schnappverbindungstechnik.

Der Vorteil bei der Verwendung solcher Endstücke für die Saugrohre besteht darin, daß die Saugrohrlänge in gewissen Grenzen variiert werden kann und damit die Ansaugeinrichtung auf die Erfordernisse der jeweiligen Brennkraftmaschine abstimmbar ist.

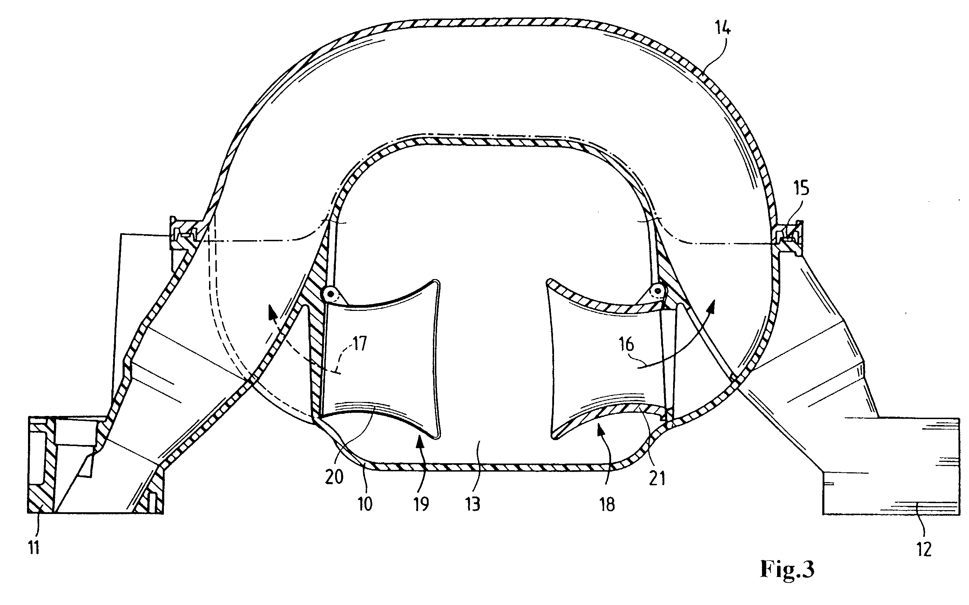

Figur 3 zeigt eine Ansaugeinrichtung die wesentlichen Merkmale der in Figur 1 gezeigten Ansaugeinrichtung aufweist. Hier besteht jedoch die Möglichkeit, durch zwei schaltbare Zusatzteile die Saugrohrlänge entsprechend der Drehzahl der Brennkraftmaschine zu variieren. Die Schaltelemente 18,19 sind in das Element 10 eingeschoben bzw. mit dem Element verbunden, wobei jeweils wenigstens ein Teil der Schaltelemente drehbeweglich angeordnet ist. Bei dem hier gezeigten Beispiel sind dies die Schwenkteile 20,21. In der hier gezeigten Stellung ist die Saugrohrverlängerung durch die Schaltelemente 18,19 wirksam, die Schwenkteile 20,21 können nach oben bewegt werden und verringern damit die wirksame Saugrohrlänge.

### Bezugszeichenliste

- 10: Element
- 11: Anschlußflansch
- 12: Anschlußflansch
- 13: Hohlraum
- 14: Abdeckung
- 15: Schweißverbindung
- 16: Pfeil
- 17: Pfeil
- 18: Schaltelement
- 19: Schaltelement
- 20: Schwenkteil
- 21: Schwenkteil
- 22: Zusatzteil
- 23: Zusatzteil

## Patentansprüche

1. Ansaugeinrichtung mit Ansaugrohren aus thermoplastischem Kunststoff für die Ansaugluft einer Brennkraftmaschine mit V-förmig angeordneten Zylinderreihen, bestehend aus wenigstens zwei Elementen, wobei das erste Element (10) eine im Querschnitt im wesentlichen geschlossene Form aufweist und einen Hohlraum (13) beinhaltet, der als Luftsammelraum gestaltet ist und durch einen Ziehkern gebildet ist, wobei der Ziehkern quer zu den Ansaugrohren entformbar ist, und wobei das erste Element gleichzeitig die untere Halbschale der Ansaugrohre bildet und wobei das zweite Element (14) die Abdeckung und die obere Halbschale der Ansaugrohr bildet.

2. Ansaugeinrichtung nach Anspruch 1, **dadurch gekennzeichnet, daß** die beiden Elemente (10, 14) in Kunststoffschweißtechnik miteinander verbunden sind.

3. Ansaugeinrichtung nach einem der vorherigen Ansprüche, **dadurch gekennzeichnet, daß** das erste Element (10) den Träger für das zweite Element (14) bildet.

4. Ansaugeinrichtung nach Anspruch 2 oder 3, **dadurch gekennzeichnet, daß** in dem ersten Element (10) ein Luftsammelraum (13) angeordnet ist.

5. Ansaugeinrichtung nach einem der vorherigen Ansprüche, **dadurch gekennzeichnet, daß** im Luftsammelraum (13) wenigstens ein weiteres, insbesondere einschiebbares Element (22, 23) vorgesehen ist, welches die Saugrohrlänge verändert.

6. Ansaugeinrichtung nach Anspruch 5, **dadurch gekennzeichnet, daß** das weitere Element (18, 19) schaltbar ist.

7. Ansaugeinrichtung nach Anspruch 6, **dadurch gekennzeichnet, daß** das weitere Element (18, 19) schwenk- oder drehbar im ersten Element (10) angeordnet ist.

8. Ansaugeinrichtung nach einem der vorherigen Ansprüche, **dadurch gekennzeichnet, daß** im Luftsammelraum (13) ein Luftfilter vorgesehen ist.

## Claims

1. Intake apparatus having intake pipes, formed from thermoplastic plastics material, for the intake air of an internal combustion engine having rows of cylinders disposed in a "V" shape, said apparatus comprising at least two elements, wherein the first element (10) has a configuration with a substantially closed cross-section and includes a cavity (13), which is in the form of an air collecting chamber and is formed by a drawing core, wherein the drawing core is mould-releasable transversely relative to the intake pipes, and wherein the first element forms simultaneously the lower half-shell of the intake pipes, and wherein the second element (14) forms the cover and the upper half-shell of the intake pipe.

2. Intake apparatus according to claim 1, **characterised in that** the two elements (10, 14) are interconnected by a plastics material welding technique.

3. Intake apparatus according to one of the previous claims, **characterised in that** the first element (10) forms the carrier for the second element (14).

4. Intake apparatus according to claim 2 or 3, **characterised in that** an air collecting chamber (13) is disposed in the first element (10).

5. Intake apparatus according to one of the previous claims, **characterised in that** at least one additional, more especially insertable element (22, 23), which changes the length of the induction manifold, is provided in the air collecting chamber (13).

6. Intake apparatus according to claim 5, **characterised in that** the additional element (18, 19) is connectable.

7. Intake apparatus according to claim 6, **characterised in that** the additional element (18, 19) is pivotably or rotatably disposed in the first element (10).

8. Intake apparatus according to one of the previous claims, **characterised in that** an air filter is provided in the air collecting chamber (13).

## Revendications

1. Système d'admission comportant des tubulures d'aspiration en matière thermoplastique pour l'air aspiré par un moteur à combustion interne avec des rangées de cylindres disposées en V, ce système se composant d'au moins deux éléments, dont le premier élément (10) a une forme en section essentiellement fermée et comporte une cavité (13) constituant une chambre collectrice d'air et un noyau étiré, le noyau étiré se démoulant transversalement aux tubulures d'aspiration, et le premier élément constitue en même temps la demi-coquille inférieure des tubulures d'aspiration, alors que le second élément (14) constitue le couvercle et la coquille supérieure de la tubulure d'aspiration.

2. Système d'admission selon la revendication 1,
**caractérisé en ce que**
les deux éléments (10, 14) sont reliés l'un à l'autre par une soudure de matière plastique.

3. Système d'admission selon l'une quelconque des revendications précédentes,
**caractérisé en ce que**
le premier élément (10) forme le support pour le second élément (14).

4. Système d'admission selon l'une quelconque des revendications 2 ou 3,
**caractérisé en ce qu'**
une chambre collectrice d'air (13) est prévue dans le premier élément (10).

5. Système d'admission selon l'une quelconque des revendications précédentes,
**caractérisé en ce que**
dans la chambre collectrice d'air (13) au moins un autre élément (22, 23) s'introduit en particulier par coulissement et modifie la longueur de la tubulure d'admission.

6. Système d'admission selon la revendication 5,
**caractérisé en ce que**
cet autre élément (18, 19) peut être commuté.

7. Système d'admission selon la revendication 6,
**caractérisé en ce que**
l'autre élément (18, 19) est monté articulé ou tournant sur le premier élément (10).

8. Système d'admission selon l'une quelconque des revendications précédentes,
**caractérisé par**
un filtre à air prévu dans la chambre collectrice d'air (13).
